# EUROPÄISCHE PATENTSCHRIFT

(11) **EP 0 265 938 B1**
(45) Veröffentlichungstag und Bekanntmachung des Hinweises auf die Patenterteilung: **16.03.1994**
(21) Anmeldenummer: 87115883.8
(22) Anmeldetag: 29.10.1987
(51) Int. Cl.: H02M 3/337

(54) **Gleichspannunswandler**
DC-DC converter
Convertisseur de courant continu

(30) Priorität: 31.10.1986 DE 3637079
(43) Veröffentlichungstag der Anmeldung: 04.05.1988
(73) Patentinhaber: Industrielabor für Hochenergie-Elektronik Winfried P. Rütt-Hübner KG, D-64572 Büttelborn (DE)
(72) Erfinder: Rütt, Winfried, D-6087 Büttelborn 2 (DE)
(74) Vertreter: Patentanwälte Möll und Bitterich

(56) Entgegenhaltungen:
- US-A- 4 007 413
- US-A- 4 245 289
- Amateurfunk, Verlag Sport und Technik, 1958, Seite 456

## Beschreibung

Die Erfindung betrifft einen Gleichspannungswandler (DC/DC power converter), der in wenigstens zwei parallelen Kanälen (I, II) je einen Sperrwandler und einen Flußwandler kombiniert, enthaltend wenigstens einen ersten und einen zweiten Sperrwandler-Transformator, jeweils mit wenigstens einer Primärwicklung und einer Sekundärwicklung, wobei in Serie zu den Primärwicklungen je ein getakteter primärer Leistungsschalter und in Serie zu den Sekundärwicklungen je ein sekundärer Leistungsschalter geschaltet ist.

Gleichspannungswandler zum Umwandeln einer primären Gleichspannung in eine sekundäre Gleichspannung sind weithin bekannt und gebräuchlich. Man unterscheidet grundsätzlich zwei Arten, den Flußwandler und den Sperrwandler. Sperrwandler sind nur als Eintaktschaltungen bekannt. Flußwandler werden sowohl als Eintakt- als auch als Gegentaktschaltungen realisiert.

Die bekannten Sperrwandler-Schaltungen besitzen eine Reihe von Nachteilen. Die Berechnung des Transformators muß in langwierigen, sich wiederholenden Verfahren erfolgen, Schutzmaßnahmen gegen Transformatorsättigung, gegen die Einflüsse der Streuinduktivität und gegen eine Überschreitung der Durchbruchspannung des Leistungsschalters müssen getroffen werden, was die Anzahl der erforderlichen Bauteile stark erhöht. Der Transformator überträgt die Energie nur während einer Hälfte jeder Periode, was den Gesamtwirkungsgrad der Schaltung niedrig hält.

Ein höherer Energiefluß und damit ein besserer Wirkungsgrad ergeben sich bei Verwendung von Gegentaktschaltungen. Gegentaktschaltungen sind nur als Flußwandler bekannt. Hier arbeiten zwei Leistungsschalter im Gegentakt mittels zweier Primärwicklungen auf einen Transformator. Gegentaktschaltungen erfordern jedoch eine sehr gute Symmetrierung im Primärkreis, damit keine Gleichstromvormagnetisierung im Transformator entsteht. Außerdem müssen besondere Schutzmaßnahmen getroffen werden, um zu verhindern, daß die Leistungsschalter gleichzeitig eingeschaltet sind, was zu einem Kurzschluß führen würde.

Aus der DE-Zeitschrift "Elektronikpraxis", Oktober 1986, Seite 52ff ist ein Eintaktwandler bekannt, der mit zwei Transformatoren arbeitet, deren Primärwicklungen in Serie und deren Sekundärwicklungen über je einen Gleichrichter parallel geschaltet sind. Durch geeignete Polung der Primär- und Sekundärwicklungen und der Gleichrichter arbeitet der eine Transformator als Flußwandler, der andere als Sperrwandler. Diese Schaltung hat gegenüber den Grundschaltungen gewisse Vorteile, beispielsweise sind Schutzmaßnahmen gegen eine Überschreitung der Durchbruchspannung des Leistungsschalters nicht erforderlich. Gleichwohl ist der Bauelementeaufwand durch Verwendung zweier Transformatoren noch hoch. Auch kann diese Schaltung nur als Eintaktwandler betrieben werden. Dies bedeutet, daß jeder Transformator nur während einer Hälfte jeder Periode Leistung überträgt.

Aus der japanischen Patentanmeldung 60-170461 (A) ist eine Weiterentwicklung dieser Schaltung bekannt. Zwei im Gegentakt angesteuerte Transistoren arbeiten auf vier Transformatoren, von denen mit Hilfe von an die Sekundärwicklungen angeschalteten Gleichrichterdiosen jeweils zwei als Eintakt-Sperrwandler und jeweils zwei als Eintakt-Flußwandler zur Bildung einer Sekundärspannung arbeiten. Auch hier überträgt jeder Transformator nur während einer Hälfte jeder Periode Leistung.

Aus dem US-Patent 4455596 ist ein Eintakt-Gleichspannungswandler mit einem Transformator und einer Primärwicklung bekannt. Der Transformator besitzt zwei Sekundärwicklungen, wovon die eine mit Hilfe einer geeignet gepolten Gleichrichterdiode als Sperrwandler, die andere mit Hilfe einer geeignet gepolten Gleichrichterdiode als Flußwandler wirkt. Der Transformator überträgt in beiden Hälfte jeder Periode Energie. Allerdings muß die während der Flußphase übertragene Energie in einer Speicherdrossel zwischengespeichert werden und kann erst während der folgenden Sperrphase an einen Sekundärkreis abgegeben werden. Die Notwendigkeit, eine Speicherdrossel und eine zweite Gleichrichterdiode vorzusehen, macht die Ersparnis, die die Verwendung eines einzigen Transformators bringen würde, wieder zunichte. Außerdem schwanken beide Sekundärspannungen sehr stark in Abhängigkeit von dem jeweiligen Lastwiderstand, wie es von Sperrwandlern bekannt ist.

Der vorliegenden Erfindung liegt die Aufgabe zugrunde, eine Schaltungsanordnung für einen Gleichspannungswandler anzugeben, der elektrische Leistung sowohl in der Flußphase als auch in der Sperrphase überträgt und mit einem Minimum an Bauelementen arbeitet.

Diese Aufgabe wird dadurch gelöst, daß die Transformatoren mit Hilfe eines Koppel-Kreises lose miteinander magnetisch gekoppelt sind, der jeweils in der Flußphase von dem einen Transformator Energie auf den jeweils anderen Transformator überträgt.

Damit ergeben sich die Vorteile, daß die Zahl der Bauteile, insbesondere der teuren und voluminösen Transformatorbauteile auf das absolute Minimum reduziert ist und daß die Transformatoren optimal ausgenutzt werden, da sie sowohl während der Flußphase als auch während der Sperrphase Leistung übertragen. Sperrwandler und Flußwandler können auf einen Sekundärkreis geschaltet werden, da sie zu unterschiedlichen Zeiten Energie abgeben. Auch sind die Spannungs- und die Strombelastung der primären Leistungsschalter gegenüber denen eines herkömmlichen Sperrwandlers merklich verringert.

Die erfindungsgemäße Schaltungsanordnung stellt die Kombination eines Gegentakt-Flußwandlers mit einem Gegentakt-Sperrwandler dar, obwohl es nach herrschender Meinung Gegentakt-Sperrwandler nicht geben kann. Bei dieser Schaltungsanordnung wird die Entmagnetisierung der Transformatorkerne durch das Magnetfeld der jeweils anderen Primärspule aktiv unterstützt. Aus diesem Grunde wäre - wie bei einem herkömmlichen Gegentakt-Flußwandler - ein Luftspalt in den Transformatorkernen nicht erforderlich. Die Transformatoren können ausschließlich für den Durchlaßbetrieb dimensioniert werden, was die Berechnung sehr vereinfacht.

Darüber hinaus ist es bei dieser Schaltung möglich, die Entmagnetisierung der Transformatorkerne durch das von der jeweils anderen Primärspule gebildete Magnetfeld bis zu einer gegensinnigen Magnetisierung zu steigern, so daß die Aussteuerung des Eisenkerns gegenüber der, die bei einem herkömmlichen Sperrwandler möglich ist, wesentlich erhöht werden kann, mit der Folge eines erhöhten Leistungsflusses und Wirkungsgrades.

Ein letzter Vorteil dieser Schaltung besteht darin, daß sie die Möglichkeit bietet, zwei unabhängig voneinander regelbare Ausgangsspannungen abnehmen zu können. Der Regelbereich der beiden Ausgangsspannungen hängt im wesentlichen davon ab, in welchem Verhältnis der Flußwandleranteil der Schaltung zum Entstehen der einzelnen Sekundärspannungen beiträgt.

Der Koppel-Kreis, der die beiden Sperrwandler-Transformatoren miteinander verbindet und Energie von dem jeweils sich in der Flußphase befindenden Transformator an den jeweils anderen Transformator überträgt, läßt sich in der Praxis sehr einfach realisieren, und zwar entweder als ein Luftspalt zwischen den beiden Transformator-Kernen, über den die magnetischen Kraftlinien vom einen Kern auf den anderen gelangen können, oder durch eine geschlossene Drahtschleife, die über beide Transformatoren gewickelt ist (siehe dazu 'Amateurfunk', Verlag Sport und Technik, 1958, Seite 456).

Um besonders hohe Leistungen übertragen zu können, werden mehrere Transformatorkerne so zusammengestellt, daß sie die Kanten eines Parallelepipeds, insbesondere eines Würfels, bilden. Dabei ist auf jedes Paar von Transformatorkernen eine Primärwicklung und eine Sekundärwicklung aufgebracht.

Die vier Primärwicklungen können über vier primäre Leistungsschalter mit Strom versorgt werden. Gemäß einer Weiterbildung der Erfindung können jedoch jeweils zwei auf sich diagonal gegenüberliegenden Transformatorkernen aufgebrachte Primärwicklungen parallelgeschaltet werden, so daß nur zwei primäre Leistungsschalter erforderlich sind.

Diese Ausführungsform mit den räumlich angeordneten Transformatorkernen hat den Vorteil, daß nur relativ geringe Kerngrößen erforderlich sind, und daß die Windungszahlen der einzelnen Primär- und Sekundärwicklungen größer, die Drahtstärken kleiner sind als bei herkömmlichen Transformatorschaltungen. Dadurch werden die exakte Einhaltung der errechneten Werte und die Fertigung erleichtert, insbesondere bei hohen Leistungen.

Wegen der mit der erfindungsgemäßen Schaltungsanordnung erreichbaren hohen Taktfrequenz empfiehlt es sich, die Leistungsschalter als Halbleiter-Bauelemente auszubilden. Die primären Leistungsschalter sind Transistoren; die sekundären Leistungsschalter können je nach Bedarf als Transistoren, Thyristoren oder Dioden ausgebildet sein.

Überraschenderweise hat sich gezeigt, daß die Schaltung auch dann einwandfrei arbeitet, wenn nur ein primärer Leistungsschalter funktioniert, d. h., wenn nur eine Primärwicklung und zwei Sekundärwicklungen vorgesehen sind.

Anhand der Zeichnung soll die Erfindung in Form von Ausführungsbeispielen näher erläutert werden. Es zeigen:
- Fig. 1: ein Blockschaltbild eines Gleichspannungswandlers,
- Fig. 2: einen ersten Gleichspannungswandler in Gegentaktschaltung mit zwei Ausgangsspannungen,
- Fig. 3: einen zweiten Gleichspannungswandler in Gegentaktschaltung mit einer Ausgangsspannung,
- Fig. 4: eine räumliche Spulen-Transformatorkern-Anordnung für einen Gleichspannungswandler in Gegentaktschaltung für hohe Leistungen und
- Fig. 5: eine weitere räumliche Spulen-Transformatorkern-Anordnung, die die vierfache Leistung der Anordnung in Fig. 4 ergibt.

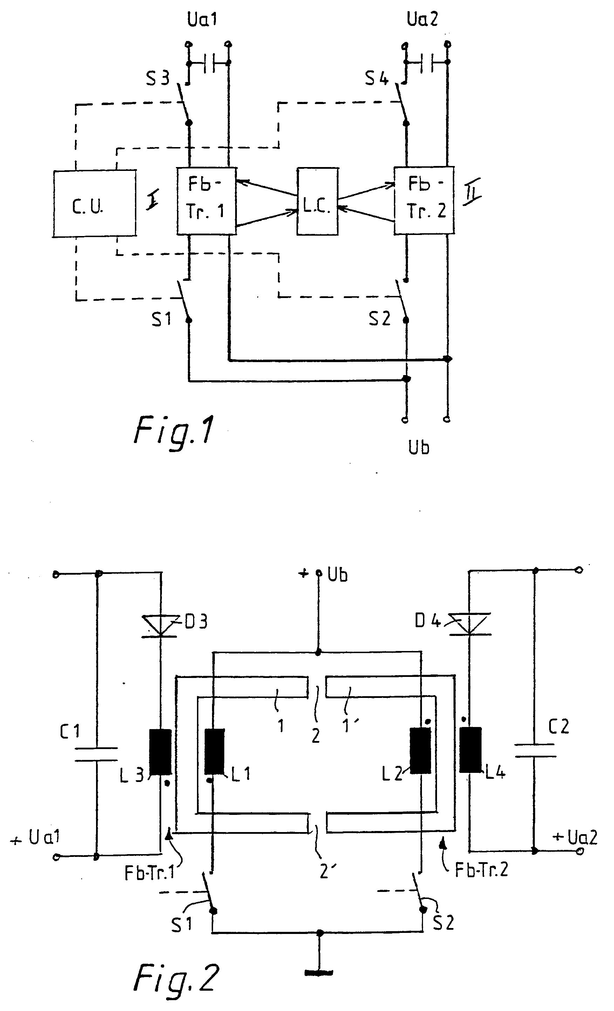

Fig. 1 zeigt als Blockschaltbild in schematischer Darstellung einen Gegentakt-Gleichspannungswandler. Es sind in zwei parallelen Kanälen I, II je ein Sperrwandler-Transformator (Fb-Tr1, Fb-Tr2) vorgesehen, deren Primärseiten durch je einen getakteten primären Leistungsschalter S1, S2 abwechselnd mit der primären Gleichspannung Ub verbunden werden. Die Sekundärseiten der Sperrwandler-Transformatoren Fb-Tr1, Fb-Tr2 sind über sekundäre Leistungsschalter S3, S4 an sekundäre Gleichspannungskreise gelegt, an denen die Sekundärspannungen Ua1, Ua2 abgenommen werden können.

Die Leistungsschalter S1...S4 werden von einer Steuereinheit C.U. ein- und ausgeschaltet.

Die Sperrwandler-Transformatoren Fb-Tr1, Fb-Tr2 beider Kanäle I, II sind zusätzlich durch einen Koppel-Kreis L.C. lose miteinander gekoppelt. Diese Kopplung ist so, daß jeweils von dem Transformator, dessen Kanal sich gerade in der Fluß-Phase befindet, Energie auf den jeweils anderen Transformator übertragen wird. Beide Transformatoren übertragen Leistung während beider Hälften jeder Periode. Sie sind optimal ausgenutzt. Die Spitzenbelastungen der primären Leistungsschalter S1, S2 sind sowohl spannungsmäßig als auch strommäßig geringer als bei herkömmlichen Gleichspannungswandlern.

Fig. 2 zeigt eine erste Realisierung des in Fig. 1 dargestellten Blockschaltbildes. Der erste Sperrwandler-Transformator Fb-Tr1 wird gebildet durch einen U-Kern 1, der mit einer Primärwicklung L1 und einer Sekundärwicklung L3 bewickelt ist. Beide Wicklungen L1, L3 sind eng gekoppelt, wie es bei Sperrwandlern bekannt ist. Der zweite Sperrwandler-Transformator Fb-Tr2 besteht ebenfalls aus einem U-Kern 1ʹ, der mit einer Primärwicklung L2 und einer Sekundärwicklung L4 bewickelt ist. Auch die beiden Wicklungen L2, L4 sind eng gekoppelt.

Beide Primärwicklungen L1, L2 werden über getaktete primäre Leistungsschalter S1, S2 abwechselnd an die primäre Gleichspannung Ub geschaltet.

Die sekundären Leistungsschalter sind hier als Gleichrichterdioden D3, D4 ausgebildet. Die sekundären Gleichspannungen Ua1, Ua2 können an Kondensatoren C1, C2 abgenommen werden. Die Höhe der sekundären Ausgangsspannungen Ua1, Ua2 läßt sich durch das Ein-Aus-Verhältnis der primären Leistungsschalter S1, S2 steuern.

Der Koppel-Kreis L.C. ist im Ausführungsbeispiel der Fig. 2 durch Luftspalte 2, 2ʹ realisiert. Über diese Luftspalte 2, 2ʹ gelangen die magnetischen Kraftlinien von einem Transformator zum anderen, und zwar jeweils während dessen Fluß-Phase, was durch die Polung der Primärwicklungen L1, L2, der Sekundärwicklungen L3, L4 und der Dioden D3, D4 bewirkt wird. Durch die Größe der Luftspalte 2, 2ʹ läßt sich die Kopplung zwischen den beiden Transformatoren Fb-Tr1, Fb-Tr2 beeinflussen.

Ist beispielsweise der primäre Leistungsschalter S1 geschlossen, dann befindet sich der Transformator Fb-Tr1 in der Fluß-Phase. Die von der Primärwicklung L1 im Transformatorkern 1 erzeugten magnetischen Kraftlinien fließen über die Luftspalte 2, 2ʹ in den anderen Transformatorkern 1ʹ und erzeugen in dessen Sekundärwicklung L4 eine Spannung, die von der Diode D4 gleichgerichtet und an den Kondensator C2 geführt wird, wo sie zur Bildung der Sekundärspannung Ua2 beiträgt.

Während der anschließenden Sperr-Phase des Transformators Fb-Tr1 ist der primäre Leistungsschalter S1 geöffnet. Die magnetischen Kraftlinien im Transformatorkern 1 erzeugen jetzt eine Ausgangsspannung in der Sekundärwicklung L3, die von der Diode D3 gleichgerichtet und auf den Kondensator C1 übertragen wird, wo sie zur Bildung der sekundären Ausgangsspannung Ua1 beiträgt.

Analoge Betrachtungen lassen sich auch für den Transformator Fb-Tr2 anstellen. Beide Sperrwandler-Transformatoren Fb-Tr1, Fb-Tr2 tragen somit abwechselnd zur Bildung beider Ausgangsspannungen Ua1, Ua2 bei. Der Regelbereich der beiden Ausgangsspannungen Ua1 bzw. Ua2 ist im wesentlichen davon abhängig, mit welchem Anteil der jeweilige Flußwandler zum Entstehen der Ausgangsspannungen Ua1 bzw. Ua2 beiträgt.

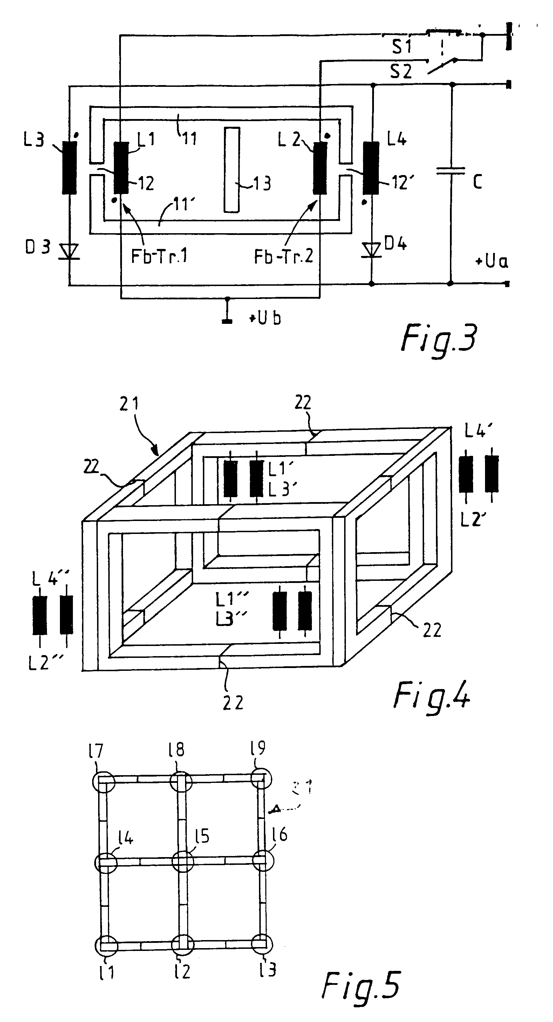

Fig. 3 zeigt eine abgewandelte Gegentakt-Schaltungsanordnung. Die beiden Sekundärwicklungen L3, L4 arbeiten über ihre zugehörigen Gleichrichterdioden D3, D4 auf denselben Sekundärkreis zur Erzeugung einer einzigen Ausgangsspannung +Ua. Die beiden primären Leistungsschalter S1, S2 werden mit gleicher Frequenz und in Gegentakt gesteuert. Ihre Einschaltund Ausschaltphasen sind in diesem Ausführungsbeispiel gleich.

Auch in diesem Ausführungsbeispiel besteht der Transformatorkern aus zwei U-Kernen 11, 11ʹ, jedoch mit kurzen Schenkeln und langer Basis. Die Wicklungspaare L1, L3 bzw. L2, L4 sind im Bereich der Luftspalte 12, 12ʹ angeordnet. Die gewünschte lose Kopplung wird durch die Länge des unbewickelten Teils der Transformatorkerne 11, 11ʹ erreicht. Durch einen magnetischen Nebenschluß 13 ist die magnetische Kopplung zusätzlich fein einstellbar.

An einer Schaltung gemäß Fig. 3 mit einer Leistung von ca. 1,5 kW konnte ein Wirkungsgrad von 96 - 98 % gemessen werden.

Bei den Gegentaktschaltungen der Fig. 2 und 3 wird das von der einen Primärspule im einen Transformatorkern aufgebaute Magnetfeld durch das von der jeweils anderen Primärspule erzeugte Magnetfeld abmagnetisiert. Diese Abmagnetisierung durch die jeweils andere Primärspule kann bis zu einer gegensinnigen Magnetisierung gesteigert werden. Die magnetischen Verhältnisse in den Transformatorkernen entsprechen dann denen eines Gegentakt-Flußwandlers. Aus diesem Grund sind bei den Gegentaktschaltungen der Fig. 2 und 3 Luftspalte entbehrlich. Die Sperrwandler-Transformatoren können nach den für Gegentakt-Flußwandler-Transformatoren gültigen Regeln dimensioniert werden. Dies gilt auch für die Leistungsschalter.

Fig. 4 zeigt eine Anordnung von Transformatorkernen und Wicklungen, die insbesondere für hohe Leistungen geeignet ist. Der Transformatorkern 21 besteht aus acht U-Kernen, die die Kanten eines Parallelepipeds, insbesondere eines Würfels, bilden. Die Primär- und Sekundärwicklungen sind in jeweils zwei Teilwicklungen L1ʹ, L1'' ... L4ʹ, L4'' aufgeteilt. Gleichnamige Teilwicklungen sind auf jeweils sich diagonal gegenüberliegenden Schenkeln des Transformatorkerns 21 aufgebrahct. Die Anordnung der Luftspalte 22 erfolgt in der gleichen Weise wie anhand der Fig. 2 oder 3 beschrieben. Jede Teilwicklung besitzt die doppelte Windungszahl. Die gleichnamigen Teilwicklungen können parallel geschaltet werden. Es ist jedoch auch möglich, jeder Teilwicklung L1ʹ, L1''; L2ʹ, L2''; L3ʹ, L3'', L4ʹ, L4'' einen eigenen Leistungsschalter S1, S2, D3, D4 zuzuordnen, so daß dann vier parallele Kanäle vorhanden sind.

Fig. 5 zeigt eine Draufsicht auf eine Anordnung von Transformatorkernen 31 und Wicklungen für noch höhere Leistungen. Hier sind vier Anordnungen entsprechend Fig. 4 ineinander geschachtelt. Neun Paare von Primär- und Sekundär-Teilwicklungen l1...l9 sind jeweils dort angebracht, wo die Transformatorkerne 31 aneinandergrenzen. Die Teilwicklungen l1, l3, l5, l7, l9 werden dem einen Kanal, die Teilwicklungen l2, l3, l6, l8 dem anderen Kanal zugeordnet. Auch hier können die zueinandergehörigen Teilwicklungen parallelgeschaltet und mit einem eigenen Leistungsschalter in Serie geschaltet. Es ist jedoch auch möglich, jeder Teilwicklung einen eigenen Leistungsschalter zuzuordnen, so daß dann bis zu 9 Kanäle vorhanden sind.

## Patentansprüche

1. Gleichspannungswandler, der in wenigstens zwei parallelen Kanälen (I, II) je einen Sperrwandler und einen Flußwandler kombiniert, enthaltend wenigstens einen ersten und einen zweiten Sperrwandler-Transformator (Fb-Tr1, Fb-Tr2), jeweils mit wenigstens einer Primärwicklung (L1, L2) und einer Sekundärwicklung (L3, L4), wobei in Serie zu den Primärwicklungen (L1, L2) je ein getakteter primärer Leistungsschalter (S1, S2) und in Serie zu den Sekundärwicklungen (L3, L4) je ein sekundärer Leistungsschalter (S3, S4) geschaltet ist, dadurch gekennzeichnet, daß die Transformatoren (Fb-Tr1, Fb-Tr2) mit Hilfe eines Koppel-Kreises (L.C.) lose miteinander magnetisch gekoppelt sind, und daß die Primärwicklung (L1, L2) des einen Transformators und die Sekundärwicklung (L3, L4) des anderen Transformators jeweils so gewickelt sind, daß jeweils in der Fluß-Phase von dem einen Transformator Energie auf den jeweils anderen Transformator übertragen wird.

2. Gleichspannungswandler nach Anspruch 1, dadurch gekennzeichnet, daß die sekundären Leistungsschalter (S3, S4) schaltbare bzw. nicht-schaltbare Gleichrichter (D3, D4) sind.

3. Gleichspannungswandler nach Anspruch 1, dadurch gekennzeichnet, daß die sekundären Leistungsschalter (S3, S4) Transistoren sind.

4. Gleichspannungswandler nach Anspruch 1, dadurch gekennzeichnet, daß der Koppel-Kreis (L.C.) eine geschlossene Drahtschleife ist, die über beide Transformatoren (Fb-Tr1, Fb-Tr2) geführt ist.

5. Gleichspannungswandler nach Anspruch 1, dadurch gekennzeichnet, daß der Koppel-Kreis (L.C.) ein Luftspalt (2; 12; 22) ist.

6. Gleichspannungswandler nach Anspruch 1, dadurch gekennzeichnet, daß der Koppel-Kreis (L.C.) ein langer unbewickelter Schenkel eines Transformatorkerns (11, 11ʹ) ist, wobei gegebenenfalls zwischen den Schenkeln ein magnetischer Nebenschluß (13) angeordnet ist.

7. Gleichspannungswandler nach Anspruch 1, 2, 3, 5 oder 6, dadurch gekennzeichnet, daß die Transformator-Kerne (1, 11, 21) U-Kerne sind, deren Schenkel sich jeweils mit Luftspalt (2, 12, 22) gegenüberstehen.

8. Gleichspannungswandler nach Anspruch 7, dadurch gekennzeichnet, daß die Wicklungspaare (L1, L3; L2, L4) im Bereich der Luftspalte (12, 12ʹ) auf dem Transformatorkern (11, 11ʹ) angeordnet sind.

9. Gleichspannungswandler nach Anspruch 1, 7 oder 8, dadurch gekennzeichnet, daß die Transformator-Kerne (21) die Kanten eines Parallelepipeds, insbesondere eines Würfels, bilden und daß an den Stellen, wo zwei Kerne aneinandergrenzen, je eine Primärund eine Sekundärwicklung (L1, L1ʹ ... L4, L4ʹ) aufgebracht ist.

10. Gleichspannungswandler nach Anspruch 9, dadurch gekennzeichnet, daß jeweils zwei sich diagonal gegenüberliegende Primärwicklungen (L1, L1ʹ; L2, L2ʹ) und/oder Sekundärwicklungen (L3, L3ʹ, L4, L4ʹ) parallelgeschaltet sind.

11. Gleichspannungswandler nach Anspruch 1, 9 oder 10, dadurch gekennzeichnet, daß eine Mehrzahl von Transformator-Kernen (31) vorgesehen ist, die mehrere ineinander verschachtelte Parallelepipede, insbesondere Würfel, bilden.

12. Gleichspannungswandler nach Anspruch 1, dadurch gekennzeichnet, daß die primären Leistungsschalter (S1, S2) im Gegentakt mit gleicher Taktfrequenz, jedoch mit unterschiedlicher Einschaltdauer gesteuert sind.

13. Gleichspannungswandler nach wenigstens einem der Ansprüche 1 bis 12, dadurch gekennzeichnet, daß nur ein primärer Leistungsschalter (S1) mit einer Primärwicklung (L1) und zwei Sekundärwicklungen (L2, L4) vorgesehen sind.

## Claims

1. A d.c./d.c. voltage converter in which at least two parallel channels (I, II) are each combined with a flyback converter and a flux converter, comprising at least a first and a second flyback converter-transformer (Fb-Tr1, Fb-Tr2), each with at least one primary coil (L1, L2) and one secondary coil (L3, L4), wherein each primary coil (L1, L2) is connected in series with a clocked primary power switch (S1, S2) and each secondary coil (L3, L4) is connected in series with a secondary power switch (S3, S4), characterised in that the transformers (Fb-Tr1, Fb-Tr2) are magnetically coupled loosely with one another by means of a coupling circuit (L.C.), and in that the primary coil (L1, L2) of one transformer and the secondary coil (L3, L4) of the other transformer are each wound in such a way that power is transmitted from one transformer to the other transformer in each flux phase.

2. A d.c./d.c. voltage converter according to Claim 1, characterised in that the secondary power switches (S3, S4) are switchable or non-switchable rectifiers (D3, D4).

3. A d.c./d.c. voltage converter according to Claim 1, characterised in that the secondary power switches (S3, S4) are transistors.

4. A d.c./d.c. voltage converter according to Claim 1, characterised in that the coupling circuit (L.C.) is a closed wire loop which passes via the two transformers (Fb-Tr1, Fb-Tr2).

5. A d.c./d.c. voltage converter according to Claim 1, characterised in that the coupling circuit (L.C.) is an air gap (2; 12; 22).

6. A d.c./d.c. voltage converter according to Claim 1, characterised in that the coupling circuit (L.C.) is a long uncoiled arm of a transformer core (11, 11'), a magnetic shunt (13) being arranged optionally between the arms.

7. A d.c./d.c. voltage converter according to Claim 1, 2, 3, 5 or 6, characterised in that the transformer cores (1, 11, 21) are U-shaped cores, the arms of which are situated opposite one another with a respective air gap (2, 12, 22).

8. A d.c./d.c. voltage converter according to Claim 7, characterised in that the coil pairs (L1, L3; L2, L4) are disposed in the vicinity of the air gaps (12, 12') on the transformer core (11, 11').

9. A d.c./d.c. voltage converter according to Claim 1, 7, or 8, characterised in that the transformer cores (21) form the edges of a parallelepiped, in particular of a cube, and that in each case one primary and one secondary coil (L1, L1' ...L4, L4') are mounted at the locations where two cores adjoin one another.

10. A d.c./d.c. voltage converter according to Claim 9, characterised in that in each case two primary coils (L1, L1'; L2, L2') and/or secondary coils (L3, L3'; L4, L4') situated diagonally opposite one another are connected in parallel.

11. A d.c./d.c. voltage converter according to Claim 1, 9 or 10, characterised in that a plurality of transformer cores (31) is provided which form a plurality of parallelepipeds inserted into one another, in particular cubes.

12. A d.c./d.c. voltage converter according to Claim 1, characterised in that the primary power switches (S1, S2) are controlled in push-pull mode with like clock frequency but with different on-period.

13. A d.c./d.c. voltage converter according to at least one of Claims 1 to 12, characterised in that only one primary power switch (S1) is provided with one primary coil (L1) and two secondary coils (L2, L4).

## Revendications

1. Convertisseur continu-continu, combinant, en au moins deux canaux (I, II) parallèles, chaque fois un convertisseur à oscillateur bloqué et un convertisseur de flux, comprenant au moins un premier et un deuxième transformateur de convertisseur à oscillateur bloqué (Fb-Tr1, Fb-Tr2), chacun avec au moins un bobinage primaire (L1, L2) et un bobinage secondaire (L3, L4), un commutateur de puissance primaire (S1, S2) cadencé étant chaque fais branché en série avec les bobinages primaires (L1, L2) et un commutateur de puissance secondaire (S3, S4) étant chaque fois branché en série avec les bobinages secondaires (L3, L4), caractérisé en ce que les transformateurs (Fb-Tr1, Fb-Tr2) sont couplés magnétiquement ensemble de façon lâche à l'aide d'un circuit de couplage (L.C.), et en ce que le bobinage primaire (L1, L2) du premier transformateur et le bobinage secondaire (L3, L4) de l'autre transformateur sont chacun bobinés de façon que de l'énergie sait chaque fois transmise dans la phase de flux, du premier transformateur au deuxième transformateur.

2. Convertisseur continu-continu selon la revendication 1, caractérisé en ce que les commutateurs de puissance secondaires (S3, S4) sont des redresseurs (D3, D4), commutables ou non commutables.

3. Convertisseur continu-continu selon la revendication 1, caractérisé en ce que les commutateurs de puissance secondaires (S3, S4) sont des transistors.

4. Convertisseur continu-continu selon la revendication 1, caractérisé en ce que le circuit de couplage (L.C.) est une boucle de fil métallique fermée, passant sur les deux transformateurs (Fb-Tr1, Fb-Tr2).

5. Convertisseur continu-continu selon la revendication 1, caractérise en ce que le circuit de couplage (L.C.) est un entrefer (2 ; 12 ; 22).

6. Convertisseur continu-continu selon la revendication 1, caractérisé en ce que le circuit de couplage (L.C.) est une longue branche, non bobinée, d'un noyau de transformateur (11, 11'), une dérivation (13) magnétique étant, le cas échéant, disposée entre les branches.

7. Convertisseur continu-continu selon la revendication 1, 2, 3, 5 ou 6, carcactérisé en ce eue les noyaux de transformateur (1, 11, 21) sont des noyaux en U, dont les branches se font chaque fois face, avec l'entrefer (2, 12, 22).

8. Convertisseur continu-continu selon la revendication 7, caractérisé en ce que les paires de bobinages (L1, L3 ; L2, L4) sont disposées dans la zone des entrefers (12, 12'), sur le noyau de transformateur (11, 11').

9. Convertisseur continu-continu selon la revendication 1, 7 ou 8, caractérisé en ce que les noyaux de transformateur (21) forment les arêtes d'un parallélépipède, en particulier d'un cube, et en ce qu'aux endroits où se rejoignent deux noyaux sont chaque fois placés un bobinage primaire et un bobinage secondaire (L1, L1'...L4, L4').

10. Convertisseur continu-continu selon la revendication 9, caractérisé en ce que chaque fois deux bobinages primaires (L1, L1' ; L2, L2') et/ou bobinages secondaires (L3, L3' ; L4, L4') sont branchés en parallèle.

11. Convertisseur continu-continu selon la revendication 1, 9 ou 10, caractérisé en ce qu'est prévue une pluralité de noyaux de transformateurs (31), formant plusieurs parallélépipèdes, en particulier des cubes, emboîtés les uns dans les autres.

12. Convertisseur continu-continu selon la revendication 1, caractérisé en ce que les commutateurs de puissance primaires (S1, S2) sont commandés en fonctionnement symétrique avec la même fréquence de cadencement, cependant avec une durée de mise en circuit différente.

13. Convertisseur continu-continu selon au moins l'une des revendications 1 à 12, caractérisé en ce que seul un commutateur de puissance primaire (S1) est prévu, avec un bobinage primaire (L1) et doux bobinages secondaires (L2, L4).
